# EUROPEAN PATENT APPLICATION

(11) **EP 4 845 118 A1**
(43) Date of publication of application: **25.11.2026**
(21) Application number: 25758429.2
(22) Date of filing: 18.02.2025
(51) Int. Cl.: H04L 45/24, H04L 45/00, H04W 76/15, H04L 47/62, H04W 88/14

(54) **SERVICE-DEFINED MULTI-PATH SCHEDULER**

(30) Priority: 19.02.2024 KR 20240023691
(71) Applicant: Samsung Electronics Co., Ltd., Suwon-si, Gyeonggi-do 16677 (KR)
(72) Inventor: MOON, Younggyoun, Suwon-si, Gyeonggi-do 16677 (KR); LIM, Jeonga, Suwon-si, Gyeonggi-do 16677 (KR); KIM, Dongmyung, Suwon-si, Gyeonggi-do 16677 (KR)
(74) Representative: Nederlandsch Octrooibureau
(86) International application number: PCT/KR2025/002337
(87) International publication number: WO 2025/178345

(57) **Abstract**

The present invention relates to a 5G or 6G communication system for supporting a higher data transmission rate. The present invention proposes a method and apparatus for setting a multi-path scheduler defined by a service in a terminal and a network and activating same, in a mobile communication system.

## Description

### [Technical Field]

The disclosure relates to operations of a UE and a network entity in a mobile communication system and, more particularly, to a method and apparatus for configuring a service-defined multi-path scheduler in the UE and a network and activating the multi-path scheduler in the mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

An embodiment of the disclosure provides a method for configuring a service-defined multi-path scheduler in a UE and a network and activating the multipath scheduler.

An embodiment of the disclosure provides a scheduler that enables multiple service traffic flows to be dynamically distributed on a per-packet basis through multiple paths.

An embodiment of the disclosure provides a method and apparatus for applying an ATSS technique according to characteristics of packets or packet groups within a flow.

An embodiment of the disclosure provides a method and apparatus for configuring a multi-path scheduler capable of performing multi-path scheduling among flows.

The technical problems to be solved by the present invention are not limited to those mentioned above, and other technical problems not mentioned will be clearly understood by those skilled in the art to which the present invention belongs from the description below.

### [Solution to Problem]

A method performed by a core network (CN) entity in a communication system according to an embodiment of the disclosure may include receiving, from a data network (DN) entity providing at least one service, information regarding one or more multi-path schedulers configured for the at least one service, determining, among the one or more multi-path schedulers configured for the at least one service, at least one multi-path scheduler available to a UE, transmitting, to the UE, an instance of a multi-path scheduler corresponding to a service requested by the UE, and activating the multi-path scheduler corresponding to the service requested by the UE.

According to an embodiment, the one or more multi-path schedulers may determine a path a path through which transmission and reception are to be performed according to at least one of a per-flow basis, a per-packet basis, or a per-packet-group basis, and may distribute a flow, a packet, or a packet group to the determined path.

According to an embodiment, the receiving of the information regarding the one or more multi-path schedulers configured for the at least one service may include receiving, from the DN, code operable as the one or more multi-path schedulers configured for the at least one service, or an executable binary or bytecode pluggable into the one or more multi-path schedulers configured for the at least one service, compiling the code in case that the code is received, and storing the one or more multipath schedulers configured for the at least one service together with identification information of a corresponding service.

According to an embodiment, the determining of the one or more multi-path schedulers available to the UE may include establishing a multi-access (MA) protocol data unit (PDU) session with the UE, determining the at least one multi-path scheduler available to the UE among the one or more multi-path schedulers configured for the at least one service, based on at least one of whether support is available from a performance measurement function (PMF) of the UE, whether support is available from a PMF of the CN entity, or whether a multi-path scheduler corresponds to a service available for the UE, and storing the determined at least one multi-path scheduler as a list of multi-path schedulers applicable to the MA PDU session.

According to an embodiment, the transmitting of the instance of the multipath scheduler corresponding to the service requested by the UE may further include receiving, from the UE, a message including identification information for the service requested by the UE, and transmitting, to the UE, information regarding the at least one multi-path scheduler available to the UE, or information regarding the multi-path scheduler corresponding to the service requested by the UE among the at least one multi-path scheduler available to the UE.

According to an embodiment, the transmitting of the instance of the multipath scheduler corresponding to the service requested by the UE may include transmitting, to the UE, code operable as the multi-path scheduler corresponding to the service requested by the UE, or an executable binary or bytecode pluggable into the multi-path scheduler corresponding to the service requested by the UE.

Further, a method performed by a UE in a communication system according to an embodiment of the disclosure may include establishing an MA PDU session with a CN entity, receiving, from the CN entity, an instance of a multi-path scheduler corresponding to a service requested by the UE, and activating the multi-path scheduler corresponding to the service requested by the UE.

According to an embodiment, the receiving of the instance of the multi-path scheduler corresponding to the service requested by the UE may include transmitting, to the CN entity, a message including identification information for the service requested by the UE, receiving, from the CN entity, information regarding the at least one multi-path scheduler available to the UE, or information regarding the multi-path scheduler corresponding to the service requested by the UE among the at least one multi-path scheduler available to the UE, and, in case that the information regarding the one or more multi-path schedulers available to the UE is received, determining information regarding the multi-path scheduler corresponding to the service requested by the UE among the at least one multi-path scheduler available to the UE.

According to an embodiment, the receiving the instance of the multi-path scheduler corresponding to the service requested by the UE may include receiving, from the CN entity, code operable as the multi-path scheduler corresponding to the service requested by the UE, or an executable binary or bytecode pluggable into the multi-path scheduler corresponding to the service requested by the UE, and compiling the code in case that the code is received.

Further, a CN entity in a communication system according to an embodiment of the disclosure may include a transceiver, and a controller configured to receive, through the transceiver from a DN entity providing at least one service, information regarding one or more multi-path schedulers configured for the at least one service, determine at least one multi-path scheduler available to a UE among the one or more multi-path schedulers configured for the at least one service, transmit, through the transceiver to the UE, an instance of a multi-path scheduler corresponding to a service requested by the UE, and activate the multi-path scheduler corresponding to the service requested by the UE.

Further, a UE in a communication system according to an embodiment of the disclosure may include a transceiver, and a controller configured to establish an MA PDU session with a CN entity, receive, through the transceiver from the CN entity, an instance of a multi-path scheduler corresponding to a service requested by the UE, and activate the multi-path scheduler corresponding to the service requested by the UE.

### [Advantageous Effects of Invention]

An embodiment of the disclosure may provide a method for configuring and activating a service-defined multi-path scheduler in a UE and a network.

An embodiment of the disclosure may provide a scheduler that enables multiple service traffic flows to be dynamically distributed on a per-packet basis through multiple paths.

An embodiment of the disclosure may provide a method and apparatus for applying ATSS techniques according to characteristics of packets or packet groups within a flow.

An embodiment of the disclosure may provide a method and apparatus for configuring a multi-path scheduler capable of performing multi-path scheduling among flows.

The effects obtainable from the present invention are not limited to those mentioned above, and other unmentioned effects will be clearly understood by those skilled in the art to which the present disclosure belongs from the description below.

### [Brief Description of Drawings]

FIG. 1 illustrates an example of an architecture of a wireless communication system according to an embodiment of the disclosure.
FIG. 2 is a diagram illustrating an example of an access traffic steering, switching, splitting (ATSSS) support architecture in a 3GPP 5G system according to an embodiment of the disclosure.
FIG. 3 is a diagram illustrating a schematic configuration of a UE and a UPF supporting ATSSS according to an embodiment of the disclosure.
FIG. 4 is a diagram illustrating an example of an ATSSS architecture according to an embodiment of the disclosure.
FIG. 5 illustrates examples of workload-specific KPIs for respective services and applications.
FIG. 6 is a diagram illustrating an example of a method for configuring and implementing a multi-path scheduler according to an embodiment of the disclosure.
FIG. 7 is a diagram illustrating an example of a method for installing a multipath scheduler in a UE and a network according to an embodiment of the disclosure.
FIG. 8 is a diagram illustrating an example of a method for delivering a multipath scheduler to a CN according to an embodiment of the disclosure.
FIG. 9 is a diagram illustrating an example of a method for adding a list of multi-path schedulers available for an MA PDU session according to an embodiment of the disclosure.
FIG. 10 is a diagram illustrating an example of a method for identifying availability of a multi-path scheduler according to a service request according to an embodiment of the disclosure.
FIG. 11 is a diagram illustrating another example of a method for identifying availability of a multi-path scheduler according to a service request according to an embodiment of the disclosure.
FIG. 12 is a diagram illustrating an example of a method for activating a multi-path scheduler according to an embodiment of the disclosure.
FIG. 13 is a diagram illustrating another example of a method for activating a multi-path scheduler according to an embodiment of the disclosure.
FIG. 14 is a diagram illustrating an example of a case in which a method for delivering a multi-path scheduler to a CN follows a 5G CN configuration according to an embodiment of the disclosure.
FIG. 15 is a diagram illustrating an example of a case in which a method for adding a list of multi-path schedulers available for an MA PDU session follows a 5G CN configuration according to an embodiment of the disclosure.
FIG. 16 is a diagram illustrating an example of a method for executing a multi-path scheduler according to an embodiment of the disclosure.
FIG. 17 is a block diagram illustrating an internal structure of a UE according to an embodiment of the disclosure.
FIG. 18 is a block diagram illustrating a structure of a base station according to an embodiment of the disclosure.
FIG. 19 is a block diagram illustrating a structure of a network entity according to an embodiment of the disclosure.

### [Mode for the Invention]

Hereinafter, the operation principle of the disclosure will be described in detail with reference to the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Accordingly, the definitions thereof should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described in detail with reference to the accompanying drawings.

Hereinafter, the operation principle of the disclosure will be described in detail with reference to the accompanying drawings. The terms which will be described below are terms defined in consideration of the functions in the disclosure. Theses terms may be different according to users, intentions of the users, or customs, and their definitions should be made based on the contents throughout the specification.

For the same reason, some components in the accompanying drawings are illustrated in an exaggerated, omitted, or schematic manner. In addition, the sizes of respective components do not entirely reflect their actual sizes.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Specific terms used in the following description are provided to help understanding the disclosure, and the use of such specific terms may be changed into other forms without departing from the technical spirit of the disclosure.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order).

As used hereinafter, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Also, the embodiments of the disclosure as described below may also be applied to other communication systems having similar technical backgrounds or channel types to the embodiments of the disclosure. Furthermore, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, or NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure.

In the following description, terms for identifying access nodes, terms referring to network entities or network functions, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the international telecommunication union (ITU) or 3rd generation partnership project (3GPP) long term evolution (LTE) standards and.or the 3GPP new radio (NR) standards may be used for the sake of descriptive convenience. However, the disclosure is not limited by these terms and names, and may be applied in the same way to systems that conform other specifications.

A review of the development of wireless communication from generation to generation shows that the development has mostly been directed to technologies for services targeting humans, such as voice-based services, multimedia services, and data services. It is expected that connected devices which are exponentially increasing after commercialization of 5th-generation (5G) communication systems will be connected to communication networks. Examples of things connected to networks may include vehicles, robots, drones, home appliances, displays, smart sensors installed in various infrastructures, construction machines, factory equipment, and the like. Mobiles devices are expected to evolve into various formfactors such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 µ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through hyper-connectivity of the 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

To satisfy the various services described above, techniques for traffic transmission through various types of access networks have been proposed and developed in mobile communication systems. As technologies for supporting dual connectivity at the Layer-2 layer, the coordinated multi-point (CoMP) technology proposed in 3GPP Releases 11 and 12, and the LTE-WLAN aggregation (LWA) and LTE-WLAN radio-level integration with IP security tunnel (LWIP) technologies proposed in 3GPP Releases 13 and 14 for the purpose of integrated transmission of LTE access and WLAN access, have been standardized and have been utilized in commercial environments. Thereafter, with the advent of 5G, requirements arose for a comprehensive technology encompassing even Non-3GPP access networks, and access traffic steering, switching, and splitting (ATSSS) technology was proposed in 3GPP Release 16. Accordingly, the 5G system architecture inherently supports not only access networks employing multiple radio access technologies (RATs) but also Non-3GPP accesses (e.g., Wi-Fi), thereby enabling multi-access (MA) protocol data unit (PDU) sessions utilizing such multiple accesses to be controlled and operated through a single common CN.

These technologies may be utilized in various ways by leveraging multiple transmission paths across multiple access networks, for example, to provide high transmission reliability and resistance to problems caused by network congestion and radio-link losses, and to address network congestion and improve maximum bandwidth through packet distribution across multiple access networks.

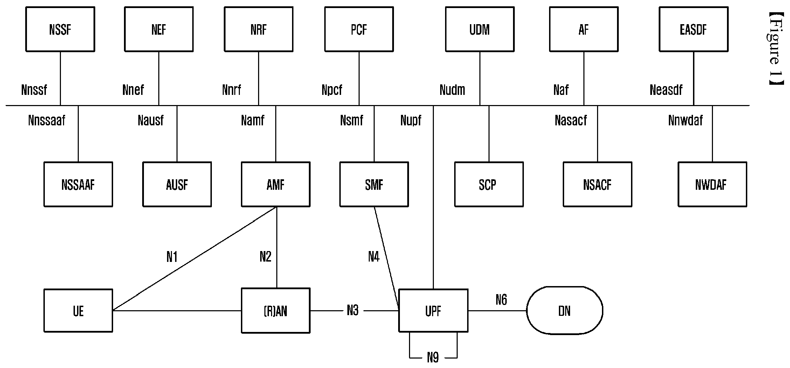

FIG. 1 illustrates an example of an architecture of a wireless communication system according to an embodiment of the disclosure. FIG. 1 illustrates an architecture of a 5G system.

Referring to FIG. 1, a 5G network may include at least one of network entities (NEs) or network functions (NFs) described below.

A (radio) access network ((R)AN) is an entity that performs radio resource allocation for a UE, and may be at least one of an eNode B, a Node B, a base station (BS), a next generation radio access network (NG-RAN), a 5G access network (5G-AN), a wireless access unit, a base station controller, or a node on the network.

A terminal may include a user equipment (UE), a next generation UE (NG UE), a mobile station (MS), a cellular phone, a smartphone, an Internet of Things (IoT) device, or a multimedia system capable of performing a communication function.

Also, in the following description of embodiments of the disclosure, the 5G system will be described by way of example, but the embodiments of the disclosure may also be applied to other communication systems having similar technical backgrounds. Furthermore, based on determinations by those skilled in the art, the embodiments of the disclosure may also be applied to other communication systems through some modifications without significantly departing from the scope of the disclosure.

As wireless communication systems evolve from the 4G system to the 5G system, a new core network (CN) referred to as a next generation core (NG core) or a 5G core network (5GC) has been defined. The new core network may fully virtualize existing network entities (NEs) into network functions (NFs). According to an embodiment of the disclosure, a network function may refer to a network entity, a network component, and a network resource.

According to an embodiment of the disclosure, the 5GC may include the NFs illustrated in FIG. 1. Of course, the disclosure is not limited by the example in FIG. 1, and the 5GC may include a larger or smaller number of NFs than the NFs illustrated in FIG. 1.

An access and mobility management function (AMF) may be a network function that manages access and mobility of a UE. For example, the AMF may perform network functions, such as registration, connection, reachability, and mobility management of a UE, access verification, authentication, and mobility event generation.

A session management function (SMF) may be a network function that manages packet data network (PDN) connection provided to a user equipment (UE). The PDN connection may be called a protocol data unit (PDU) session. For example, the SMF may perform network functions, such as a session management function through session establishment, modification, and release, and tunnel maintenance between a user plane function (UPF) and the RAN required therefor, user plane (UP) selection and control, traffic processing control at the UPF, and charging data collection control.

A policy control function (PCF) may be a network function that applies a service policy, a charging policy, and a PDU session policy of a mobile communication service provider to a UE.

A unified data management (UDM) may be a network function that stores information about a subscriber. For example, the UDM may perform functions, such as generation of authentication information for 3GPP security, processing of a user identifier (user ID), management of a list of network functions supporting a UE, and management of subscription information.

A network exposure function (NEF) may be a function that provides information about a UE to a server located outside the 5G network. In addition, the NEF may provide a function of providing information required for a service to the 5G network and storing same in a unified data repository (UDR).

A user plane function (UPF) may be a function that serves as a gateway for delivering user data (PDU) to a data network (DN). More specifically, the UPF may serve to process data so as to deliver data transmitted by a UE to an external network or deliver incoming data from an external network to a UE. As an example, the UPF may perform network functions, such as serving as an anchor between radio access technologies (RAT), packet routing and forwarding, packet inspection, user plane policy application, traffic usage report creation, and buffering.

A network repository function (NRF) may perform functions of storing profiles of NFs and discovering NFs.

An authentication server function (AUSF) may perform UE authentication in a 3GPP access network and a non-3GPP access network.

A network slice selection function (NSSF) may perform selection of a network slice instance provided to a UE.

A network data analytics function (NWDAF) may collect data from various NFs for the purpose of efficient operation of the 5GC network. The collected data may be analyzed using a machine learning (ML) model, and the anaysis result may be provided back to the NFs so as to help each NF to provide an efficient network service.

An application function (AF) may communicate with an operator network so as to allow an external server (application server) to use a network service provided by the operator network. The AF may be classified into an internal AF and an external AF according to deployment entities. An internal AF deployed by a network operator may communicate directly with NFs within the operator network. An AF deployed by a service provider (3rd party service provider) may need to pass through the NEF in order to communicate with NFs within the operator network.

A data network (DN) may be a data network over which a UE transmits or receives data in order to use a service of a network operator or a 3rd party service.

A UE may include an IoT device. The IoT device may include a device that uses no battery power or operates with very low power, and such an IoT device will be referred to as an ambient IoT device (or simply "ambient IoT").

In 3GPP systems, conceptual links connecting NFs in the 5G system are defined as "reference points". The following example shows reference points included in the 5G system architecture represented in FIG. 1.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an AUSF
- N14: A reference point between two AMFs

Also, in 3GPP systems, the 5G system architecture may include service-based interfaces as given below.
- Nnssf: An interface based on a service by the NSSF
- Nnssaaf: An interface based on a service by the network slice-specific authentication and authorization function (NSSAAF)
- Nnef: An interface based on a service by the NEF
- Nausf: An interface based on a service by the AUSF
- Nnrf: An interface based on a service by the NRF
- Namf: An interface based on a service by the AMF
- Npcf: An interface based on a service by the PCF
- Nsmf: An interface based on a service by the SMF
- Nupf: An interface based on a service by the UPF
- Nudm: An interface based on a service by the UDM
- Naf: An interface based on a service by the AF
- Nasaf: An interface based on a service by the AUSF
- Neasdf: An interface based on a service by the edge application server discovery function (EASDF)
- Nnwdaf: An interface based on a service by the NWDAF

Components included in the network architecture of FIG. 1 may refer to physical entities respectively, or may refer to software or software-combined hardware performing individual functions. In the drawings, reference numerals represented by Nx, such as N1, N2, N3, ..., indicate known interfaces between network functions (NFs) in a 5G core network (CN), and the relevant description thereof may refer to standard specifications (e.g., TS 23.501, TS 23 502, TS 23 503, etc.) and thus a detailed description thereof will be omitted.

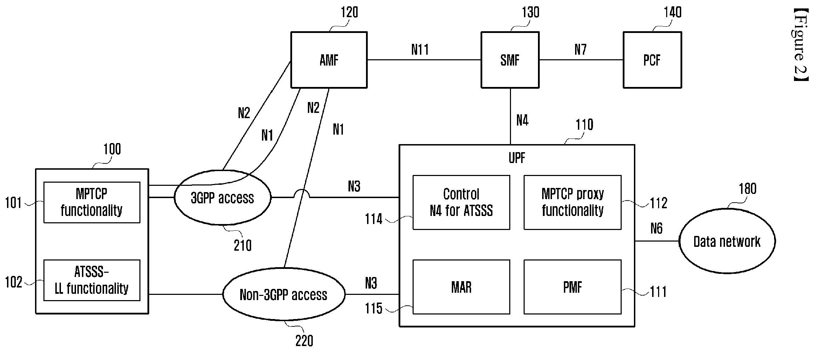

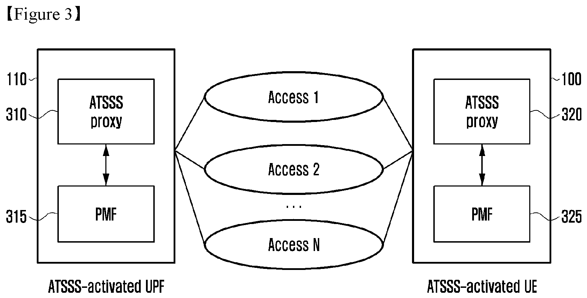

FIG. 2 is a diagram illustrating an example of an access traffic steering, switching, and splitting (ATSSS) support architecture in a 3GPP 5G system according to an embodiment of the disclosure. FIG. 3 is a diagram illustrating a schematic configuration of a UE and a UPF supporting ATSSS according to an embodiment of the disclosure.

The ATSSS function is a function of delivering data traffic through one or more accesses by utilizing both a 3GPP access and/or a Non-3GPP access between a UE and a 5G core network. As a representative example, when the 5G core network determines that user-plane resources between the UE and a DN are insufficient or that a load has occurred on the resource management capacity of the network, data traffic may be distributed and transmitted by activating both a 5G access and a Wi-Fi access, rather than transmitting the data traffic through only one of the 5G access and the Wi-Fi access.

Referring to FIG. 2, a UE 100 may access a mobile communication network, such as a 3GPP access 210, and a network that is not a mobile communication network, such as a Non-3GPP access 220. The ATSSS function includes a steering functionality and a steering mode. The steering functionality determines a transport protocol between a UPF of a transmitting device and a UPF of a receiving device. The steering functionality is determined according to the transport layer at which traffic steering, switching, and splitting are determined. When a multi-path TCP (MPTCP) protocol (IETF RFC 8684), which is located above the IP layer, is used, the steering functionality corresponds to an "MPTCP functionality 101," and when the steering, switching, and splitting are determined at a layer below the IP layer, the steering functionality corresponds to an "ATSSS-lower Layer (ATSSS-LL) functionality 102." A UE and a network supporting the MPTCP functionality 101 may communicate with an MPTCP proxy separately provided within a UPF. The MPTCP functionality may control only TCP traffic supporting the MPTCP protocol. When the ATSSS-LL functionality is supported, a separate proxy component is not included in the UPF, and all types of TCP traffic may be controlled. The steering mode defines a method for steering, switching, and splitting data traffic.

In addition, the UPF 110, the SMF 130, and the PCF 140 according to the disclosure may perform separate control operations for the above-described access of the UE 100.

As illustrated in FIG. 2, the UPF 110 according to the disclosure may include, therein, an MPTCP proxy functionality 112 for allowing access from the 3GPP access point 210, and may further include a performance measurement function (PMF) 111 for allowing access from the Non-3GPP access point 220. The PMF 111 is a function for measuring a network environment between the UE 100 and the UPF 110, and may perform round-trip time (RTT) monitoring required for uplink and downlink, measurement of whether the 3GPP access and the Non-3GPP access are currently activated, access/link availability monitoring, and the like. Based on information provided by the PMF 111, the CN may determine a steering functionality and a steering mode supportable by the CN, which may have an overall effect on determination of parameters for N3 and N4 connections.

By utilizing the ATSSS function described with reference to FIG. 2, traffic transmission through multiple paths between a PDU (protocol data unit or packet data unit) session anchor UPF 110 and the UE 100 is enabled. The UE 100 may request establishment of a multi-access (MA) PDU session. Meanwhile, to use ATSSS, the UE 100, the AMF 120, the SMF 130, and the UPF 110 are required to support ATSSS. The PCF 140 may provide an ATSSS policy to the UE 100 and the UPF 110 (through the SMF 130).

Referring to FIG. 3, in the case of the ATSSS technology, ATSSS proxies 310, 320 may be deployed in the UPF (ATSSS-enabled UPF) 110 and the UE (ATSSS-enabled UE) 100 for the purpose of distributing packets across multiple access networks. Each of the ATSSS proxies 310, 320 provides connectivity such that traffic received from a DN or a UE application is delivered through multiple paths via multiple accesses. Representative examples thereof include implementation in the form of a multi-path TCP (MPTCP) proxy to support multi-path delivery of TCP connections, or implementation in the form of a UDP-based multi-path QUIC (MPQUIC) proxy for the purpose of supporting even non-TCP connections. However, the scope to which the technology addressed in the disclosure is applied is not limited to any specific implementation form of the ATSSS proxies 310, 320 or to any specific multi-path protocol.

The ATSSS proxy 310 operating in the UPF 110 may determine through which access network traffic delivered via a downlink for an MA PDU session is to be transmitted. The ATSSS proxy 320 operating in the UE 100 may determine through which access network traffic delivered via an uplink is to be transmitted. In the conventional ATSSS technology, when packet distribution among multiple paths is performed, a packet distribution scheme is dynamically determined according to access and link conditions. Accordingly, information such as access and link availability, latency, and packet loss rate may be collected, and for this purpose, performance measurement functions (PMFs) 315, 325 may be deployed together with the ATSSS proxies 310, 320 to collect such information.

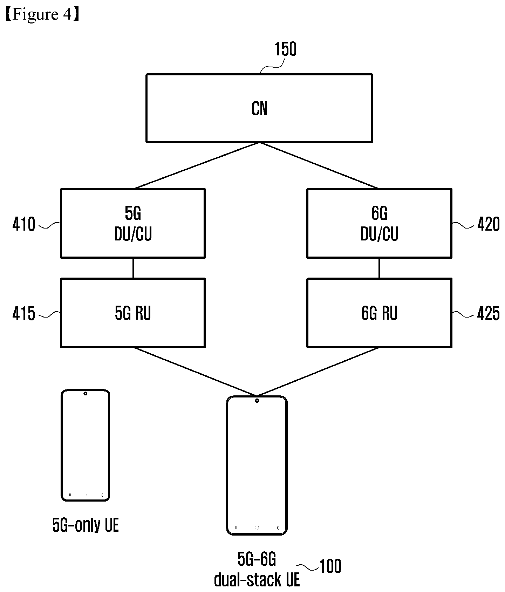

FIG. 4 is a diagram illustrating an example of an ATSSS architecture according to an embodiment of the disclosure.

Although FIGS. 2 and 3 described above illustrate utilization of a 3GPP access and a Non-3GPP access in 5G, ATSSS may also be applied in an environment using 5G and 6G, as illustrated in FIG. 4. In this case, migration may be performed between a 5G access and a 6G access.

Further, according to an embodiment, a 5G RAN (5G DU/CU 410 and 5G RU 415) providing a 5G access may be connected to a UE (a 5G-6G dual-stack UE) 100 capable of supporting both 5G and 6G, and a 6G RAN (6G DU/CU 420 and 6G RU 425) may be connected to the UE 100 capable of supporting both 5G and 6G. Further, according to an embodiment, the 5G RANs 410, 415 and the 6G RANs 420, 425 may be connected to the same CN 150 capable of providing ATSSS. This is merely illustrative, and the configuration of the disclosure is not limited thereto. At least one CN of the 5G system may be separately configured for the 5G system, and at least one CN of the 6G system may be separately configured for the 6G system.

Meanwhile, in the conventional technology, as represented by the current ATSSS standard, when traffic is transmitted through multiple paths including multiple access networks, a traffic distribution scheme is defined in the form of a steering mode. The UE 100 and the network (e.g., the UPF 110) perform a process of negotiating mutually supportable modes among standard-defined steering modes, and may distribute traffic transmitted between the UE 100 and the network according to a scheme determined based on the negotiation result. Specific examples of such schemes may be as follows.

Based on the ATSSS standard, an ATSSS steering mode for determining traffic distribution among multiple accesses may include the following five types according to 3GPP Rel-17.
Active-standby: switching to a standby access when an active access is unavailable (default)
Priority-based: a single access having the highest priority and no congestion
Smallest delay: a single access having the shortest round-trip time (RTT)
Load balancing: multiple accesses using weight-based rate control
Redundant: duplicating traffic when both accesses are available

The ATSSS steering mode described above is provisioned in the UPF 110 in the CN in the form of a multi-access rule (MAR) 115, and the corresponding rule may be applied on a per-flow basis according to a preceding packet detection rule (PDR) condition. In addition, the ATSSS steering mode may also be provisioned to the UE 100 in the form of an ATSSS rule including the ATSSS steering mode.

Further, such packet distribution schemes dynamically determine a packet distribution scheme, at the smallest granularity, on a per-flow basis according to access and link conditions. Accordingly, information such as access and link availability, latency, and packet loss rate may be collected, and for this purpose, a performance measurement function (PMF) may be deployed together with an ATSSS proxy to collect such information.

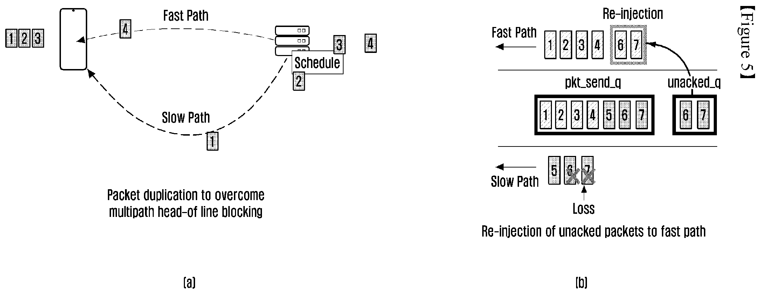

FIG. 5 illustrates examples of workload-specific KPIs for respective services and applications.

In the conventional ATSSS, a steering mode may be applied on a per-flow basis, but it is impossible to make such a determination on a per-packet basis within a flow. Accordingly, it is impossible to apply a better multi-path packet distribution mechanism in terms of quality of experience (QoE).

In practice, as transmission workloads required by recent user service applications have become diversified, key performance indicators (KPIs) reflecting various quality of service (QoS) requirements have come to be required. In addition, there exists heterogeneity in multi-paths for multi-accesses according to wireless resource and network provisioning conditions. For example, reliability (or loss ratio), throughput (with variance), peak throughput, latency, and the like may be considered.

Table 1 below shows examples of workload-specific KPIs for respective target services and applications.

**[Table 1]**

| Target service/app | Workload | KPI |
|---|---|---|
| Synthetic traffic | Large file download | aggregate throughput, out-of-order ratio |
| Video traffic (short) | short video clip | initial load time |
| Video traffic (long) | different video resolution (2K, 4K) | buffer time/frequency during playback |
| Web traffic | HTTP(/2) request | download time, page load time |
| | | flow completion time (FCT) |
| UAV | Sensor data (real-time) | Packet loss ratio |

Table 1 above is provided merely as an example for convenience of description, and the disclosure is not limited thereto.

For example, referring to (a) in FIG. 5 (packet duplication to overcome multipath head-of-line blocking), a case of short-video or web traffic for which initial/page load time is an important KPI will be described. In this case, the KPI may be improved by causing a part of the packets corresponding to the early portion of the traffic, rather than the entire flow, to be delivered through a path having a minimum RTT regardless of the load of each access network. In such a case, conventional flow-based packet distribution technologies, such as ATSSS, have a limitation in that they cannot implement such a mechanism. Accordingly, it is impossible to reflect a case in which a scheduling decision varies according to characteristics of packets (or packet groups) within a flow.

As another example, referring to (b) in FIG. 5 (re-injection of unacknowledged packets to a fast path), a case of a traffic service requiring higher reliability will be described. In this case, at the TCP level where an out-of-order ratio and a packet loss ratio are to be minimized, packets for which ACKs have not been received may need to be (re)transmitted through another path on a per-packet basis. In this regard, a multi-path scheduling policy should be dynamically applied to transmitted packets according to a transmission status for each service. However, the conventional ATSSS scheme has a limitation in that it does not support such functionality.

The conventional ATSSS technology allows scheduling only on a per-flow basis and operates independently for each flow regardless of scheduling results of other flows. Accordingly, when it is more efficient to dynamically determine transmission paths according to service-specific priorities for multiple traffic flows transmitted from a single UE, no method exists for applying such scheduling. That is, transmission scheduling among multiple flows is impossible.

For example, when QoE requirements for multiple traffic flows are all different, it is advantageous to transmit t the most delay-critical traffic flow through a path having a short RTT (i.e., a fast path) first. However, in the current ATSSS technology, no method exists for dynamically scheduling such traffic flows, and therefore, no method exists for directly performing efficient scheduling for multiple services from the perspective of overall system operation.

An embodiment of the disclosure provides a method for operating a service-defined multi-path scheduler. More specifically, whereas conventional schemes merely provided a multi-path packet distribution policy (e.g., a steering policy in an ATSSS rule) to a network and a UE, the disclosure proposes a method for directly installing and activating, in a network and a UE of a communication system, a scheduler that enables multiple service traffic flows to be dynamically distributed through multiple paths on a per-packet basis.

According to the purpose described above, requirements for the inventive configuration proposed in the disclosure may be as follows.
1) A multi-path scheduler should be definable by a service (either predefined or dynamically defined)
2) The multi-path scheduler should be applicable among flows defined by a service operating for each UE
3) Each scheduler should be capable of making the following decisions for a flow, a specific packet, or a specific packet group (e.g., an HTTP request or a frame level)
   a) Packet scheduling to a single path
   b) Duplication of a packet to multiple paths
   c) Re-injection of a retransmitted packet to a different path

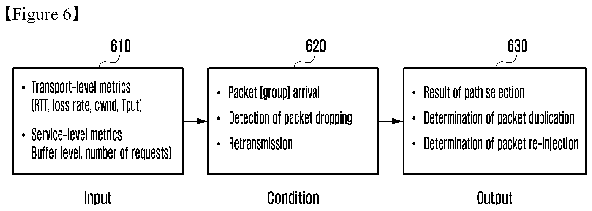

FIG. 6 is a diagram illustrating an example of a method for configuring and implementing a multi-path scheduler according to an embodiment of the disclosure.

Referring to FIG. 6, an embodiment of the disclosure may include a method and an apparatus for installing and activating a service-defined multi-path scheduler in a network and a UE. First, the service-defined multi-path scheduler refers to an implementation including a scheduling algorithm that performs the following operations according to a KPI of a traffic service, and may operate in the following manner according to general requirements. The following matters are merely exemplary, and specific operations are not limited thereto.

The multi-path scheduler may refer to an apparatus or implementation that receives an input according to a status of a transport layer or a service layer and, when a specific condition is satisfied, performs scheduling and provides a result thereof.

Input 610: As inputs required for operation of the scheduler, a metric at a transport layer of traffic (transport-level metric) (e.g., latency (RTT), loss ratio, transmission rate, cwnd, and Tput) or a metric at a service layer (service-level metric) (e.g., a buffer level and the number of requests) may be provided as an input.

Condition 620: A transmission-related event condition occurring on a packet basis or a flow basis may be considered as a condition. For example, arrival of a packet or packet group, detection of packet dropping, retransmission, and the like may be considered as conditions.

Output 630: A path among multiple paths through which a packet is to be transmitted may be derived, or a scheduling result may be derived, such as copying (duplicating) a packet to multiple paths and simultaneously delivering the packet, delivering, through another path, traffic already transmitted through one path, or delivering a retransmitted packet through a path different from a previously used transmission path.

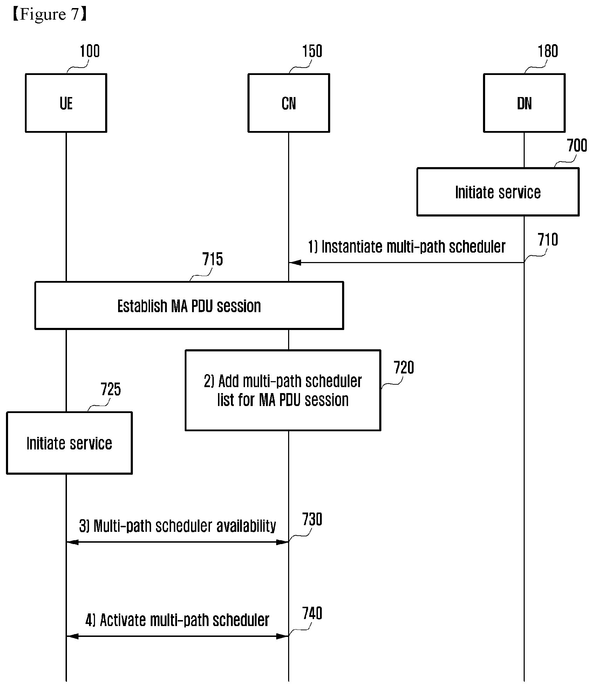

FIG. 7 is a diagram illustrating an example of a method for installing a multipath scheduler in a UE and a network according to an embodiment of the disclosure.

Referring to FIG. 7, in operation 700, a service may be initiated in a DN 180. The DN 180 may be a DN of a network operator providing the service, through which the UE 100 transmits and receives data to receive the service, and may include, for example, a server of the network operator.

In operation 710, the DN 180 may transmit a multi-path scheduler to the CN 150 through a server-side application service (multi-path scheduler instantiation). The CN 150 may be any one of a UPF 110, a PCF 140, an SMF 130, an AMF 120, a UDR 160, and a base station, but is not limited thereto. Any network entity capable of being configured with the multi-path scheduler and performing multi-path scheduling may correspond thereto.

In operation 715, the UE 100 may request establishment of a multi-access (MA) PDU session from the CN 150. Accordingly, an MA PDU session may be established between the UE 100 and the CN 150. A detailed description of the corresponding operation will be omitted.

In operation 720, the CN 150 may add a list of multi-path schedulers available for the MA PDU session established by the UE 100. Since services available for each UE 100 may be preconfigured, the CN 150 may select, as multipath schedulers available for the MA PDU session, multi-path schedulers corresponding to services available for the UE 100.

In operation 725, the UE 100 may initiate a service. That is, the UE 100 may initiate a data transmission/reception procedure for a specific service.

In operation 730, the UE 100 and the CN 150 may determine availability of a multi-path scheduler according to the requested service (according to a request from a service application).

In operation 740, among the multi-path schedulers transmitted from the DN 180 to the CN 150 in operation 710, an available multi-path scheduler may be activated in the UE 100 and the CN 150 for the corresponding MA PDU session.

Detailed operations of the respective operations described above will be described below.

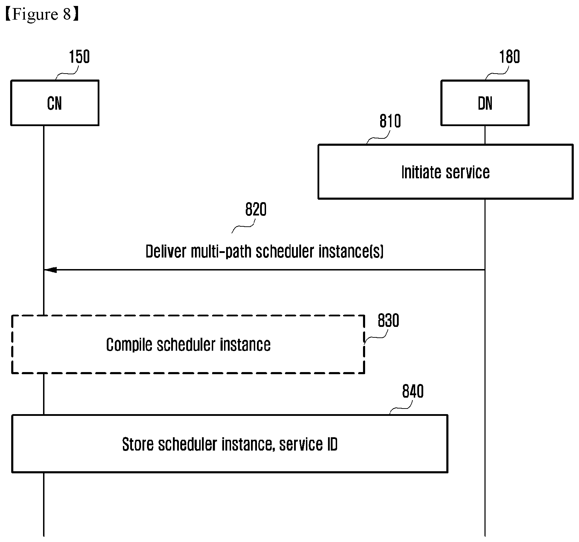

FIG. 8 is a diagram illustrating an example of a method for delivering a multipath scheduler to a CN according to an embodiment of the disclosure.

Referring to FIG. 8, in operation 810, a service application operating on the server side, that is, in the DN 180, may be executed and activated.

In operation 820, the DN 180 may instantiate a required multi-path scheduler according to service requirements. The DN 180 may transmit the one or more multipath scheduler instances to the CN 150.

According to an embodiment, in operation 820, the DN 180 may transmit, to the CN 150, code capable of operating as a multi-path scheduler. The CN 150 may compile and activate the corresponding multi-path scheduler instance in operation 830.

Alternatively, according to an embodiment, in operation 820, the DN 180 may directly provide, to the CN 150, an executable binary or bytecode (e.g., an extended Berkeley Packet Filter (eBPF)) pluggable (plug-in) into a multi-path scheduler. The CN 150 may activate the multi-path scheduler according to the received information.

In operation 840, the CN 150 may store the corresponding multi-path scheduler. In this case, the multi-path scheduler may be stored in the CN 150 while being mapped to an identifier for a service. In this case, the service identifier may be mapped, in the form of a service ID (identity), to the multi-path scheduler for the corresponding service on a per-service basis. The service ID may be a unique identifier for each service. According to an embodiment, the service ID may be derived by a method including applying a hash function to a domain name.

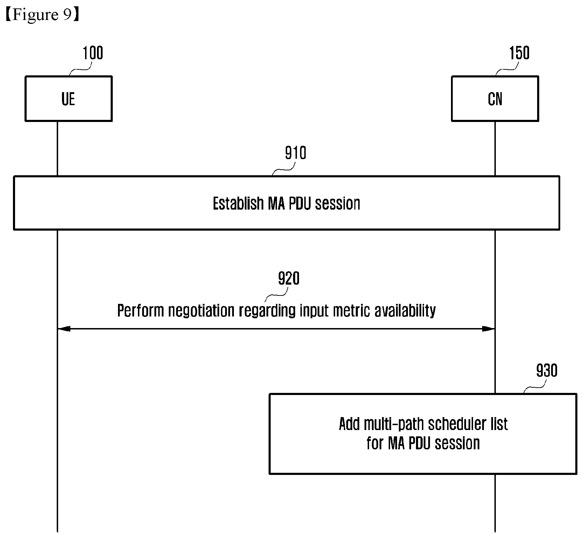

FIG. 9 is a diagram illustrating an example of a method for adding a list of multi-path schedulers available for an MA PDU session according to an embodiment of the disclosure.

Referring to FIG. 9, in operation 910, an MA PDU session may be established (created) between the UE 100 and the CN 150.

In operation 920, the UE 100 and the CN 150 may perform negotiation regarding a list of input metrics supported by PMFs configured (or deployed) therein. The monitoring information supported by the PMF of the UE 100 may differ from the monitoring information supported by the PMF of the CN 150. Accordingly, the UE 100 and the CN 150 may perform negotiation regarding a list of input metrics available for monitoring, such that a multi-path scheduler configured capable of applying input metrics supported by both entities may be selected. Alternatively, a multi-path scheduler capable of supporting input metrics supported by the UE 100 may be selected.

Meanwhile, services available for each UE 100 may be preconfigured. Accordingly, the CN 150 may select, as a multi-path scheduler available for the MA PDU session, one or more multi-path schedulers corresponding to a service available for the UE 100.

According to an embodiment, a policy for selecting a multi-path scheduler may be configured according to a policy and charging rule for each UE user configured by an operator. According to an embodiment, the policy may be configured by a PCF. Information regarding services available for a user (the UE 100) may be stored in a user information server, such as a UDR of the CN 150, and may be provided, in response to a request from a PCF, a UPF, or the like, in order to determine the policy.

According to an embodiment, when the policy is configured, one or more multi-path schedulers available for the corresponding MA PDU session may be selected by the PCF. Alternatively, according to an embodiment, the policy may be provided from the PCF to another network entity, for example, a UPF, and the UPF may select a multi-path scheduler available for the corresponding MA PDU session according to the policy.

In operation 930, the CN 150 may check, for each multi-path scheduler, whether input metric requirements are satisfied and may determine a supportable multi-path scheduler. The CN 150 may store a list of the determined multi-path schedulers for the corresponding MA PDU session. According to an embodiment, the list of multi-path schedulers may be stored in a context of the corresponding MA PDU session. According to an embodiment, the list of multi-path schedulers may be stored in a UDR.

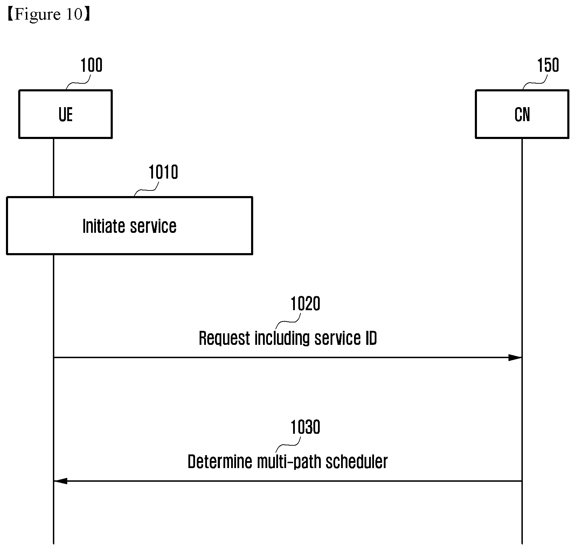

FIG. 10 is a diagram illustrating an example of a method for identifying availability of a multi-path scheduler according to a service request according to an embodiment of the disclosure.

Referring to FIG. 10, in operation 1010, a service may be executed and activated in the UE 100.

In operation 1020, the UE 100 may request multi-path scheduler information by transmitting, to the CN 150, a request message including a service identifier (service ID).

Accordingly, the CN 150 may identify one or more multi-path schedulers corresponding to the service ID. According to an embodiment, a PCF of the CN 150 may transmit the service ID to a UDR to request information regarding available multi-path schedulers and may receive, from the UDR, information regarding a multipath scheduler corresponding to the service ID. The information regarding the multi-path scheduler may be provided in the form of a list of one or more multi-path schedulers.

In operation 1030, the CN 150 may determine a multi-path scheduler to be used from among the one or more multi-path schedulers corresponding to the service ID. According to an embodiment, the CN 150 may determine the multi-path scheduler to be used in consideration of functions supported by a PMF in the UE 100 and/or the CN 150 (MW) and/or characteristics of the service.

The CN 150 may transmit information regarding the selected multi-path scheduler to the UE 100.

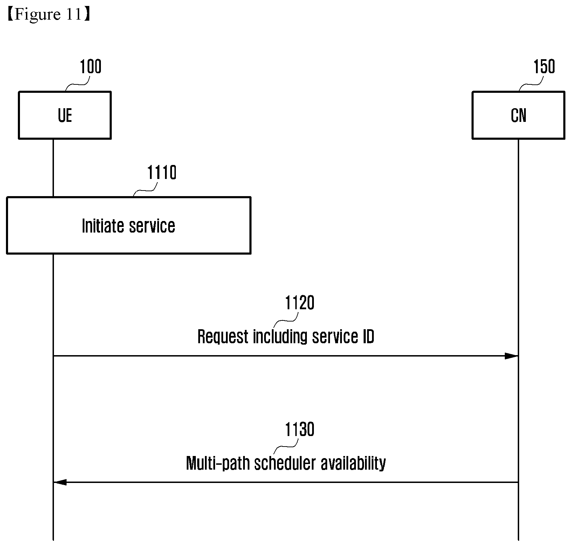

FIG. 11 is a diagram illustrating another example of a method for identifying availability of a multi-path scheduler according to a service request according to an embodiment of the disclosure.

Referring to FIG. 11, in operation 1110, a service may be executed and activated in the UE 100.

In operation 1120, the UE 100 may request multi-path scheduler information by transmitting, to the CN 150, a request message including a service identifier (service ID).

In response thereto, the CN 150 may identify one or more multi-path schedulers corresponding to the service ID. According to an embodiment, a PCF of the CN 150 may transmit the service ID to a UDR to request information regarding available multi-path schedulers and may receive, from the UDR, information regarding a multi-path scheduler corresponding to the service ID. The information regarding the multi-path scheduler may be provided in the form of a list of one or more multi-path schedulers.

In operation 1130, the CN 150 may transmit, to the UE 100, information regarding one or more multi-path schedulers corresponding to the service ID.

The UE 100 may determine a multi-path scheduler to be used from among one or more multi-path schedulers corresponding to the service ID. According to an embodiment, the UE 100 may determine the multi-path scheduler to be used in consideration of functions supported by a PMF in the UE 100 and/or the CN 150 (MW) and/or characteristics of the service.

In the embodiment illustrated in FIG. 10, the CN 150 determines a multipath scheduler and informs the UE 100 of the determined multi-path scheduler. In the embodiment illustrated in FIG. 11, the UE 100 receives information regarding a multi-path scheduler from the CN 150 and determines the multi-path scheduler.

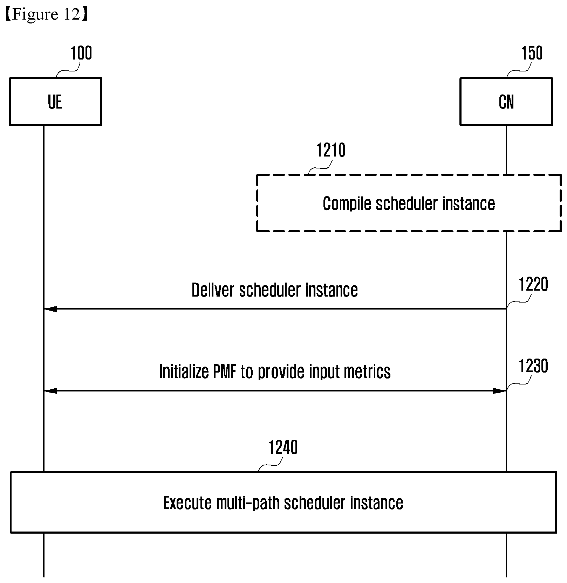

FIG. 12 is a diagram illustrating an example of a method for activating a multi-path scheduler according to an embodiment of the disclosure.

Referring to FIG. 12, in operation 1220, the CN 150 may transmit a multipath scheduler instance to the UE 100.

According to an embodiment, the CN 150 may compile and activate, in operation 1210, code operable as a scheduler, and may transmit the multi-path scheduler instance to the UE 100 in operation 1220.

Alternatively, according to an embodiment, the CN 150 may directly provide, to the UE 100, an executable binary or bytecode (e.g., an eBPF) pluggable (plug-in) into a multi-path scheduler. The UE 100 may activate the multi-path scheduler according to the received information.

In operation 1230, the UE 100 and the CN 150 may execute and initialize PMFs for obtaining information required for the multi-path scheduler (e.g., input metrics).

In operation 1240, the UE 100 and the CN 150 may execute the multi-path scheduler and apply the multi-path scheduler to the MA PDU session.

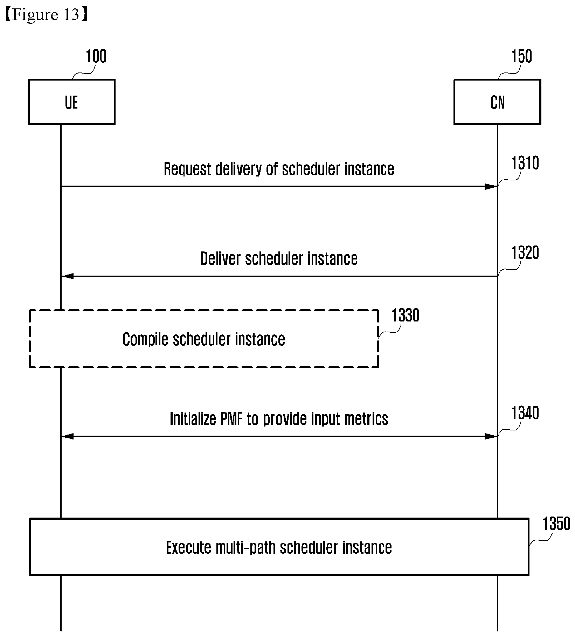

FIG. 13 is a diagram illustrating another example of a method for activating a multi-path scheduler according to an embodiment of the disclosure.

Referring to FIG. 13, in operation 1310, the UE 100 may transmit, to the CN 150, a message requesting delivery of a determined multi-path scheduler instance. In this case, the message may include information regarding the determined multipath scheduler.

In operation 1320, the CN 150 may transmit, to the UE 100, the requested multi-path scheduler instance.

According to an embodiment, the CN 150 may transmit, to the UE 100, code operable as a multi-path scheduler. The UE 100 may compile and activate the corresponding multi-path scheduler instance in operation 1330.

Alternatively, according to an embodiment, the CN 150 may directly provide, to the UE 100, an executable binary or bytecode (e.g., an eBPF) pluggable (plug-in) into a multi-path scheduler. The UE 100 may activate the multi-path scheduler according to the received information.

In operation 1340, the UE 100 and the CN 150 may execute and initialize PMFs for obtaining information required for the multi-path scheduler (e.g., input metrics).

In operation 1350, the UE 100 and the CN 150 may execute the multi-path scheduler and apply the multi-path scheduler to the MA PDU session.

In the embodiment illustrated in FIG. 12, activation of the multi-path scheduler for the corresponding MA PDU session is initiated by the CN 150. In the embodiment illustrated in FIG. 13, activation of the multi-path scheduler for the corresponding MA PDU session is initiated by the UE 100.

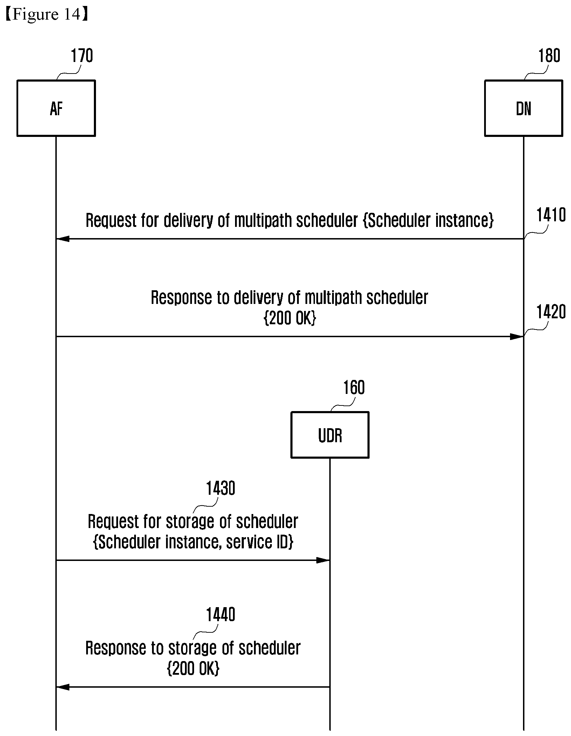

FIG. 14 is a diagram illustrating an example in which a method for delivering a multi-path scheduler to a CN according to an embodiment of the disclosure follows a 5G CN architecture.

FIG. 14 illustrates an exemplary method, following a 5G CN architecture, for the embodiment described with reference to FIG. 8 in which a multi-path scheduler is delivered to a CN. Accordingly, the network entities illustrated in FIG. 14 are provided for exemplary purposes, and may be replaced with other network entities that perform similar operations.

Referring to FIG. 14, in operation 1410, the DN 180 may transmit, to an application function (AF) 170, a message requesting delivery of a multi-path scheduler. The message requesting delivery of the multi-path scheduler may include information regarding one or more multi-path schedulers to be delivered, for example, one or more multi-path scheduler instances.

In operation 1420, the AF 170 may transmit, to the DN 180, a response message to the request for delivery of the multi-path scheduler (which may include "200 OK").

In operation 1430, the AF 170 may transmit, to the UDR 160, a message requesting storage of a scheduler. The message requesting storage of the scheduler may include information regarding one or more multi-path scheduler instances and, according to an embodiment, may further include service ID information corresponding to each of the one or more multi-path scheduler instances.

In operation 1440, the UDR 160 may store the one or more multi-path scheduler instances and may transmit, to the AF 170, a response message to the scheduler storage request (which may include "200 OK").

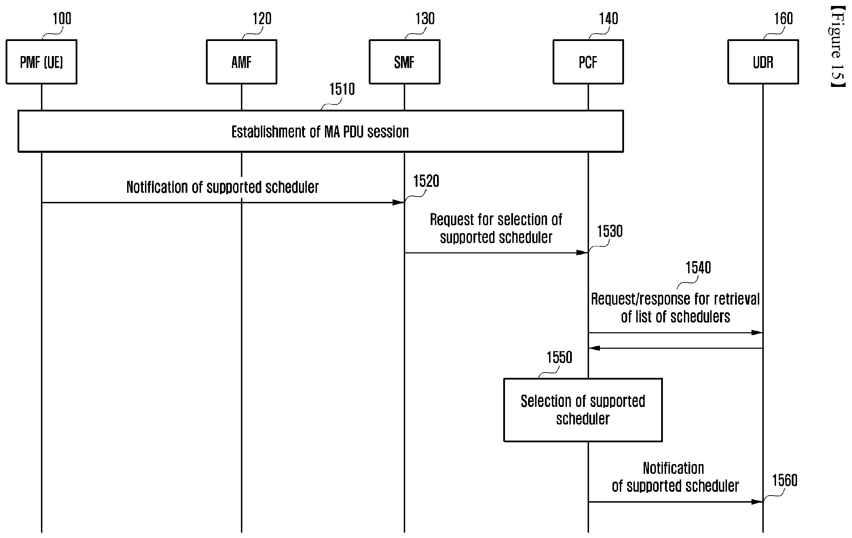

FIG. 15 is a diagram illustrating an example in which a method for adding a list of multi-path schedulers available for an MA PDU session according to an embodiment of the disclosure follows a 5G CN architecture.

FIG. 15 illustrates an exemplary method, following a 5G CN architecture, according to the embodiment described with reference to FIG. 9 in which a list of multi-path schedulers available for an MA PDU session is added. Accordingly, the network entities illustrated in FIG. 15 are merely exemplary, and may be replaced with other network entities that perform similar operations.

Referring to FIG. 15, in operation 1510, an MA PDU session may be established (created) between the UE 100 and the CN 150. In this case, the CN 150 may include, as illustrated, an AMF 120, an SMF 130, and a PCF 140, and may further include a network entity such as a UPF 110, although not illustrated.

In operation 1520, the UE 100 (or a PMF of the UE 100) may transmit, to the SMF 130 (via the AMF 120), information regarding input metrics supported (monitorable) by the PMF of the UE 100.

In operation 1530, the SMF 130 may transmit, to the PCF 140, a message requesting selection of available multi-path schedulers. In this case, the request message may include information regarding input metrics supported by the PMF of the UE 100, received from the UE 100.

In operation 1540, the PCF 140 may request, from the UDR 160, information regarding one or more multi-path schedulers (retrieve request), and may receive, from the UDR 160, information regarding the one or more multi-path schedulers (retrieve response). The information regarding the one or more multi-path schedulers may be provided to the PCF 140 in the form of a list of one or more multi-path schedulers.

In operation 1550, the PCF 140 may select an available multi-path scheduler from among the one or more multi-path schedulers received from the UDR 160. The PCF 140 may select an available multi-path scheduler in consideration of whether the one or more multi-path schedulers received from the UDR 160 support input metrics supported by the PMF of the UE 100, whether the one or more multi-path schedulers correspond to a service available for the UE 100, and the like.

In operation 1560, the PCF 140 may transmit (notify), to the UDR 160, information regarding the one or more multi-path schedulers selected in operation 1550. The UDR 160 may store, according to the information received from the PCF 140, information regarding one or more multi-path schedulers applicable to the corresponding MA PDU session. The information stored in the UDR 160 may subsequently be used when an activation request for a multi-path scheduler or the like is received.

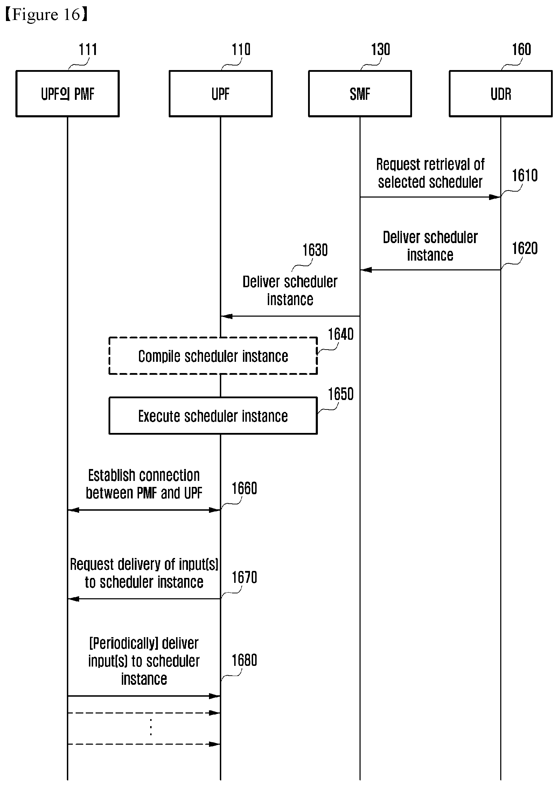

FIG. 16 is a diagram illustrating an example of a method for executing a multi-path scheduler according to an embodiment of the disclosure.

FIG. 16 illustrates an exemplary method in which execution of a multi-path scheduler follows a 5G CN architecture. Accordingly, the network entities illustrated in FIG. 16 are provided for exemplary purposes, and may be replaced with other network entities that perform similar operations.

Referring to FIG. 16, in operation 1610, the SMF 130 may request, from the UDR 160, retrieval of a multi-path scheduler. According to an embodiment, a message requesting retrieval of the multi-path scheduler may include information for identifying the requested multi-path scheduler, for example, an identifier. In addition, the request message may further include identification information for a configured MA PDU session.

In operation 1620, the UDR 160 may transmit, to the SMF 130, an instance of the requested multi-path scheduler.

In operation 1630, the SMF 130 may transmit, to the UPF 110, one or more multi-path scheduler instances received from the UDR 160.

According to an embodiment, in operation 1630, the SMF 130 may transmit, to the UPF 110, code operable as a multi-path scheduler. The UPF 110 may compile the corresponding multi-path scheduler instance in operation 1640 and may activate and execute the multi-path scheduler instance in operation 1650.

Alternatively, according to an embodiment, in operation 1630, the SMF 130 may directly provide, to the UPF 110, an executable binary or bytecode (e.g., an eBPF) pluggable (plug-in) into a multi-path scheduler. The UPF 110 may activate and execute the multi-path scheduler according to the received information in operation 1650.

In operation 1660, a connection may be established between the PMF 111 of the UPF 110 and the UPF 110.

In operation 1670, the UPF 110 may request the PMF 111 of the UPF 110 to deliver input information to at least one activated multi-path scheduler.

In operation 1680, the PMF 111 may transmit input information to the one or more multi-path schedulers activated in the UPF 110. According to an embodiment, transmission of the input information may be performed periodically, may be performed when a preconfigured condition is satisfied, or may be performed aperiodically.

Interfaces between NFs other than the interface between the UPF 110 and the SMF 130 may be a 5G standardized service-based interface (SBI) using a hypertext transfer protocol (HTTP) representational state transfer application program interface (REST API), or another custom inter-process communication (IPC) interface.

The N4 interface between the UPF 110 and the SMF 130 may be implemented using packet forwarding control protocol (PFCP) of a 5G network or using an HTTP REST API of a next-generation network.

Meanwhile, in the embodiment of FIG. 16, a method in which a multi-path scheduler is activated and executed in the UPF 110 has been illustratively described, and the method may be similarly applied to a method in which a multi-path scheduler is activated and executed in the UE 100.

For example, a PMF of the UE 100 may be activated, and the UE 100 may request the PMF of the UE 100 to deliver input information to at least one activated multi-path scheduler. The PMF of the UE 100 may transmit the input information to the one or more multi-path schedulers activated in the UE 100 periodically, aperiodically, or according to a preconfigured condition.

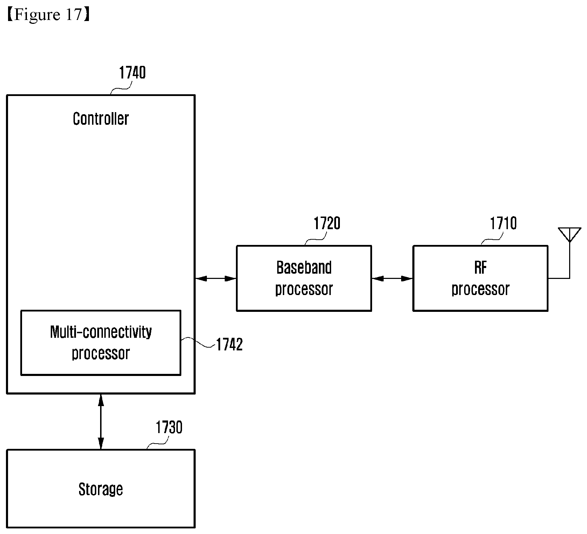

FIG. 17 is a block diagram illustrating an internal structure of a UE according to an embodiment of the disclosure.

Referring to FIG. 17, the UE may include a radio frequency (RF) processor 1710, a baseband processor 1720, a storage 1730, and a controller 1740.

The RF processor 1710 may perform functions for transmitting/receiving signals through a radio channel, such as signal band conversion and amplification. That is, the RF processor 1710 may up-convert a baseband signal provided from the baseband processor 1720 to an RF band signal, may transmit the same through an antenna, and may down-convert an RF band signal received through the antenna to a baseband signal. For example, the RF processor 1710 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1710 may include multiple RF chains. Furthermore, the RF processor 1710 may perform beamforming. For the beamforming, the RF processor 1710 may adjust the phase and magnitude of signals transmitted/received through multiple antennas or antenna elements, respectively. In addition, the RF processor may perform MIMO, and may receive multiple layers when performing an MIMO operation.

The baseband processor 1720 may perform functions of conversion between baseband signals and bitstrings according to the system's physical layer specifications. For example, in case of data transmission, the baseband processor 1720 may encode and modulate a transmitted bitstring to generate complex symbols. In addition, during data reception, the baseband processor 1720 may demodulate and decode a baseband signal provided from the RF processor 141710 to restore a received bitstring. For example, when following the orthogonal frequency division multiplexing (OFDM) scheme, during data transmission, the baseband processor 1720 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1720 may split a baseband signal provided from the RF processor 1710 at the OFDM symbol level, may restore signals mapped to subcarriers through a fast Fourier transform (FFT) operation, and may restore a received bitstring through demodulation and decoding.

The baseband processor 1720 and the RF processor 1710 transmit and receive signals as described above. Therefore, the baseband processor 1720 and the RF processor 1710 may be referred to as a transmitter, a receiver, a transceiver, or a communication unit. Furthermore, at least one of the baseband processor 1720 and the RF processor 1710 may include multiple communication modules to support multiple different radio access technologies. In addition, at least one of the baseband processor 1720 and the RF processor 1710 may include different communication modules to process signals in different frequency bands. For example, the different radio access technologies may include a wireless LAN (e.g., IEEE 802.11), a cellular network (e.g., LTE), etc. In addition, the different frequency bands may include a super high frequency (SHF) (e.g., 2NRHz) band and a millimeter wave (mmWave) (e.g., 60GHz) band.

The storage 1730 may store basic programs, application programs, and data, such as configuration information, for the operation of the UE. Particularly, the storage 1730 may store information regarding a second access node configured to perform wireless communication by using a second radio access technology. In addition, the storage 1730 provides the stored data at the request of the controller 1740.

The controller 1740 controls the overall operation of the UE. For example, the controller 1740 transmits/receives signals through the baseband processor 1720 and the RF processor 1710. In addition, the controller 1740 records data in the storage 1730 and reads the data from the storage 1730. To this end, the controller 1740 may include at least one processor. For example, the controller 1740 may include a communication processor (CP) configured to perform control for communication, and an application processor (AP) configured to control upper layers such as application programs.

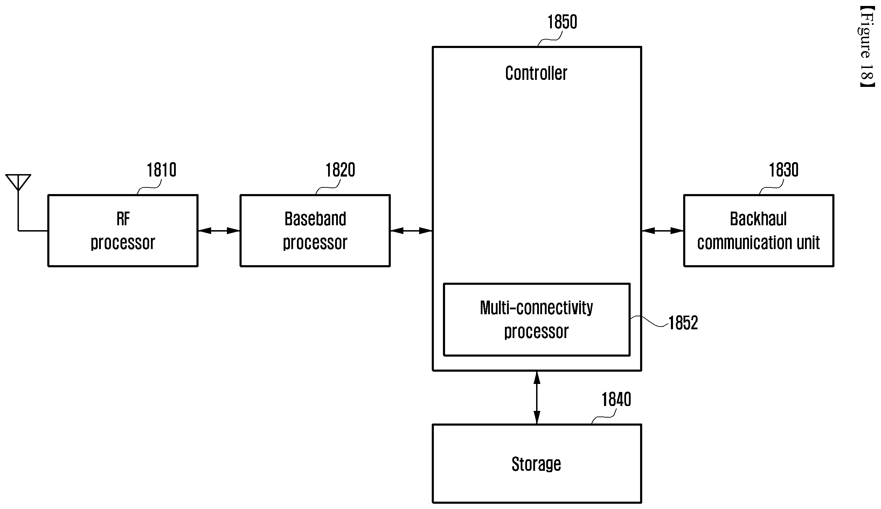

FIG. 18 is a block diagram illustrating a structure of a base station according to an embodiment of the disclosure.

Referring to FIG. 18, the base station may include an RF processor 1810, a baseband processor 1820, a backhaul communicator 1830, a storage 1840, and a controller 1850.

The RF processor 1810 may perform functions for transmitting/receiving signals through a radio channel, such as signal band conversion and amplification. That is, the RF processor 1810 may up-convert a baseband signal provided from the baseband processor 1820 to an RF band signal, may transmit the same through an antenna, and may down-convert an RF band signal received through the antenna to a baseband signal. For example, the RF processor 1810 may include a transmission filter, a reception filter, an amplifier, a mixer, an oscillator, a DAC, and an ADC. Although only one antenna is illustrated in the drawing, the first access node may include multiple antennas. In addition, the RF processor 1810 may include multiple RF chains. Furthermore, the RF processor 1810 may perform beamforming. For the beamforming, the RF processor 1810 may adjust the phase and magnitude of signals transmitted/received through multiple antennas or antenna elements, respectively. The RF processor may transmit one or more layers to perform a downward MIMO operation.

The baseband processor 1820 may perform functions of conversion between baseband signals and bitstrings according to the physical layer specifications of a first radio access technology. For example, during data transmission, the baseband processor 1820 may encode and modulate a transmitted bitstring to generate complex symbols. In addition, during data reception, the baseband processor 1820 may demodulate and decode a baseband signal provided from the RF processor 1810 to restore a received bitstring. For example, when following the OFDM scheme, during data transmission, the baseband processor 1820 may encode and modulate a transmitted bitstring to generate complex symbols, may map the complex symbols to subcarriers, and may configure OFDM symbols through IFFT operation and CP insertion. In addition, during data reception, the baseband processor 1820 may split a baseband signal provided from the RF processor 1810 at the OFDM symbol level, may restore signals mapped to subcarriers through FFT operation, and may restore a received bitstring through demodulation and decoding. The baseband processor 1820 and the RF processor 1810 transmit and receive signals as described above. Therefore, the baseband processor 1820 and the RF processor 1810 may be referred to as a transmitter, a receiver, a transceiver, or a communication unit.

The backhaul communication unit 1830 provides an interface for communicating with other nodes in the network. That is, the backhaul communication unit 1830 converts bitstrings transmitted from the base station to other nodes, for example, auxiliary base stations, core networks, etc., into physical signals, and converts physical signals received from the other nodes into bitstrings.

The storage 1840 may store basic programs, application programs, and data, such as configuration information, for the operation of the base station. Particularly, the storage 1840 may store information regarding a bearer allocated to a connected UE, a measurement result reported from the connected UE, and the like. In addition, the storage 1840 may store information serving as a criterion to determine whether to provide multi-connectivity to a UE or to suspend same. In addition, the storage 1840 provides the stored data at the request of the controller 1850.

The controller 1850 controls the overall operation of the base station. For example, the controller 1850 transmits/receives signals through the baseband processor 1820 and the RF processor 1810 or through the backhaul communication unit 1830. In addition, the controller 1850 records data in the storage 1840 and reads the data from the storage 1840. To this end, the controller 1850 may include at least one processor.

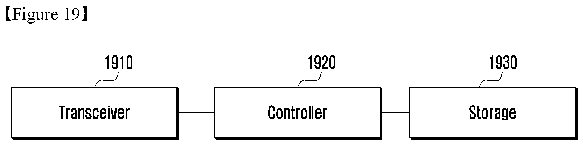

FIG. 19 is a block diagram illustrating a structure of a network entity according to an embodiment of the disclosure.

Referring to FIG. 19, the network entity according to an embodiment of the disclosure may include a processor (controller) 1920 which controls the overall operation of the network entity, a transceiver 1910 which includes a transmitter and a receiver, and a storage (memory) 1930. Of course, the example given above is not limiting, and the network entity may include a smaller or larger number of components than the components illustrated in FIG. 19.

According to an embodiment of the disclosure, the transceiver 1910 may transmit/receive signals with at least one of other network entities or UEs. The signals transmitted/received with at least one of other network entities or UEs may include control information and data.

According to an embodiment of the disclosure, the controller 1920 may control the network entity to perform operations according to any one of the above-described embodiments. The controller 1920, the memory 1930, and the transceiver 1910 are not necessarily implemented as separate modules, but may be implemented as a single component unit such as a single chip. Also, the controller 1920 and the transceiver 1910 may be electrically connected to each other. In addition, the controller 1920 may be an application processor (AP), a communication processor (CP), a circuit, an application -specific circuit, or at least one processor.

According to an embodiment of the disclosure, the storage 1930 may store basic programs, application programs, and data, such as configuration information, for the operation of the network entity. In addition, the storage 1930 provides the stored data at the request of the controller 1920. The storage 1930 may include storage media such as a ROM, a RAM, a hard disk, a CD-ROM, and a DVD, or a combination of storage media. In addition, the storage 1930 may include multiple storages. Furthermore, the controller 1920 may perform the above-described embodiments of the disclosure, based on the programs for performing the embodiments, stored in the storage 1930.

The network entity may be at least one of a CD, a DN, an AMF, an SMF, a UPF, a PCF, a UDM, a UDR, an NEF, an NRF, an AF, an NSSF, an NWDAF, an NSACF, an AUSF, an EASDF, or an NSSAAF.

It should be noted that the configuration diagrams, illustrative diagrams of control/data signal transmission methods, illustrative diagrams of operation procedures, and structural diagrams as illustrated in FIG. 1 to FIG. 19 are not intended to limit the scope of protection of the disclosure. That is, all the constituent units, entities, or operation steps shown in FIG. 1 to FIG. 19 should not be construed as essential elements for implementing the disclosure, and even when including only some of the elements, the disclosure may be implemented without impairing the true nature of the disclosure.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units and modules of a network entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a core network (CN) entity in a communication system, the method comprising:
receiving information regarding one or more multi-path schedulers configured for at least one service from a data network (DN) entity providing the at least one service;
determining, among the one or more multi-path schedulers configured for the at least one service, at least one multi-path scheduler available to a terminal;
transmitting, to the terminal, an instance of a multi-path scheduler corresponding to a service requested by the terminal; and
activating the multi-path scheduler corresponding to the service requested by the terminal.

2. The method of claim 1, wherein the one or more multi-path schedulers are configured to determine a path through which transmission and reception are to be performed according to at least one of a per-flow basis, a per-packet basis, or a per-packet-group basis, and distribute a flow, a packet, or a packet group to the determined path.

3. The method of claim 1, wherein the receiving of the information regarding the one or more multi-path schedulers configured for the at least one service comprises:
receiving, from the DN, code operable as the one or more multi-path schedulers configured for the at least one service, or an executable binary or bytecode pluggable into the one or more multi-path schedulers configured for the at least one service;
compiling the code in case that the code is received; and
storing the one or more multi-path schedulers configured for the at least one service together with identification information of a corresponding service.

4. The method of claim 1, wherein the determining of the multi-path scheduler available to the terminal comprises:
establishing a multi-access (MA) protocol data unit (PDU) session with the terminal;
based on at least one of whether support is available from a performance measurement function (PMF) of the terminal, whether support is available from a PMF of the CN entity, or whether the multi-path scheduler corresponds to a service available for the terminal, determining the at least one multi-path scheduler available to the terminal among the one or more multi-path schedulers configured for the at least one service; and
storing the determined at least one multi-path scheduler as a list of multi-path schedulers applicable to the MA PDU session.

5. The method of claim 1, wherein the transmitting of the instance of the multipath scheduler corresponding to the service requested by the terminal further comprises:
receiving, from the terminal, a message comprising identification information for the service requested by the terminal; and
transmitting, to the terminal, information regarding the at least one multipath scheduler available to the terminal, or information regarding the multi-path scheduler corresponding to the service requested by the terminal among the at least one multi-path scheduler available to the terminal.

6. The method of claim 1, wherein the transmitting of the instance of the multipath scheduler corresponding to the service requested by the terminal comprises:
transmitting, to the terminal, code operable as the multi-path scheduler corresponding to the service requested by the terminal, or an executable binary or bytecode pluggable into the multi-path scheduler corresponding to the service requested by the terminal.

7. A method performed by a terminal in a communication system, the method comprising:
establishing a multi-access (MA) protocol data unit (PDU) session with a core network (CN) entity;
receiving, from the CN entity, an instance of a multi-path scheduler corresponding to a service requested by the terminal; and
activating the multi-path scheduler corresponding to the service requested by the terminal.

8. The method of claim 7, wherein one or more multi-path schedulers are configured to determine a path through which transmission and reception are to be performed according to at least one of a per-flow basis, a per-packet basis, or a per-packet-group basis, and distribute a flow, a packet, or a packet group to the determined path.

9. The method of claim 7, wherein the receiving of the instance of the multipath scheduler corresponding to the service requested by the terminal further comprises:
transmitting, to the CN entity, a message comprising identification information for the service requested by the terminal;
receiving, from the CN entity, information regarding at least one multi-path scheduler available to the terminal, or information regarding the multi-path scheduler corresponding to the service requested by the terminal among the at least one multipath scheduler available to the terminal; and
in case that the information regarding the at least one multi-path scheduler available to the terminal is received, determining information regarding the multi-path scheduler corresponding to the service requested by the terminal among the at least one multi-path scheduler available to the terminal.

10. The method of claim 7, wherein the receiving of the instance of the multipath scheduler corresponding to the service requested by the terminal comprises:
receiving, from the CN entity, code operable as the multi-path scheduler corresponding to the service requested by the terminal, or an executable binary or bytecode pluggable into the multi-path scheduler corresponding to the service requested by the terminal; and
compiling the code in case that the code is received.

11. A core network (CN) entity in a communication system, comprising:
a transceiver; and
a controller configured to receive, through the transceiver from a data network (DN) entity providing at least one service, information regarding one or more multi-path schedulers configured for the at least one service, determine, among the one or more multi-path schedulers configured for the at least one service, at least one multi-path scheduler available to a terminal, transmit, through the transceiver to the terminal, an instance of a multi-path scheduler corresponding to a service requested by the terminal, and activate to the multi-path scheduler corresponding to the service requested by the terminal.

12. The CN entity of claim 11, wherein the one or more multi-path schedulers are configured to determine a path a path through which transmission and reception are to be performed according to at least one of a per-flow basis, a per-packet basis, or a per-packet-group basis, and distribute a flow, a packet, or a packet group to the determined path.

13. The CN entity of claim 11, wherein the controller is configured to receive, through the transceiver from the DN, code operable as the one or more multi-path schedulers configured for the at least one service, or an executable binary or bytecode pluggable into the one or more multi-path schedulers configured for the at least one service, compile the code in case that the code is received, and store the one or more multi-path schedulers configured for the at least one service together with identification information of a corresponding service.

14. The CN entity of claim 11, wherein the controller is configured to establish a multi-access (MA) protocol data unit (PDU) session with the terminal, based on at least one of whether support is available from a performance measurement function (PMF) of the terminal, whether support is available from a PMF of the CN entity, or whether a multi-path scheduler corresponds to a service available for the terminal, determine the at least one multi-path scheduler available to the terminal among the one or more multi-path schedulers configured for the at least one service, and store the determined at least one multi-path scheduler as a list of multi-path schedulers applicable to the MA PDU session.

15. The CN entity of claim 11, wherein the controller is configured to receive, through the transceiver from the terminal, a message comprising identification information for the service requested by the terminal, and transmit, through the transceiver to the terminal, information regarding the at least one multi-path scheduler available to the terminal, or information regarding the multi-path scheduler corresponding to the service requested by the terminal among the at least one multi-path scheduler available to the terminal.

16. The CN entity of claim 11, wherein the controller is configured to transmit, through the transceiver to the terminal, code operable as the multi-path scheduler corresponding to the service requested by the terminal, or an executable binary or bytecode pluggable into the multi-path scheduler corresponding to the service requested by the terminal.

17. A terminal in a communication system, comprising:
a transceiver; and
a controller configured to establish a multi-access (MA) protocol data unit (PDU) session with a core network (CN) entity, receive, through the transceiver from the CN entity, an instance of a multi-path scheduler corresponding to a service requested by the terminal, and activate the multi-path scheduler corresponding to the service requested by the terminal.

18. The terminal of claim 17, wherein one or more multi-path schedulers are configured to determine a path through which transmission and reception are to be performed according to at least one of a per-flow basis, a per-packet basis, or a per-packet-group basis, and distribute a flow, a packet, or a packet group to the determined path.

19. The terminal of claim 17, wherein the controller is configured to transmit, through the transceiver to the CN entity, a message comprising identification information for the service requested by the terminal, receive, through the transceiver from the CN entity, information regarding at least one multi-path scheduler available to the terminal, or information regarding the multi-path scheduler corresponding to the service requested by the terminal among the at least one multi-path scheduler available to the terminal, and in case that the information regarding the at least one multi-path scheduler available to the terminal is received, determine information regarding the multi-path scheduler corresponding to the service requested by the terminal among the at least one multi-path scheduler available to the terminal.

20. The terminal of claim 17, wherein the controller is configured to receive, through the transceiver from the CN entity, code operable as the multi-path scheduler corresponding to the service requested by the terminal, or an executable binary or bytecode pluggable into the multi-path scheduler corresponding to the service requested by the terminal, and compile the code in case that the code is received.
